Europäisches Patentamt
European Patent Office
Office européen des brevets

(19)

(11) Publication number: **0 118 572**
**A1**

(12)

# EUROPEAN PATENT APPLICATION

(21) Application number: 83102211.6

(22) Date of filing: 07.03.83

(51) Int. Cl.³: C 08 F 297/04

(43) Date of publication of application: 19.09.84 Bulletin 84/38

(84) Designated Contracting States: BE DE FR GB IT NL SE

(71) Applicant: THE DOW CHEMICAL COMPANY
Dow Center 2030 Abbott Road Post Office Box 1967
Midland Michigan 48640(US)

(72) Inventor: Tung, Lu Ho
401 Hunters Ridge
Midland Michigan(US)

(72) Inventor: Lo, Grace Y-S.
1032 Scott Street
Midland Michigan(US)

(74) Representative: Hann, Michael, Dr. et al,
Patentanwälte Dr. Michael Hann Dr. H.-G. Sternagel
Marburger Strasse 38
D-6300 Giessen(DE)

(54) **A process for preparation of diene styrene alpha-methylstyrene block polymers and polymers therefrom.**

(57) Diene-styrene-α-methylstyrene block polymers are prepared by polymerization in excess α-methylstyrene with a lithium initiator wherein styrene-α-methylstyrene block is polymerized at a temperature from 20° to 160°C with the ratio of styrene to α-methylstyrene being from 50:1 to 1:50.

EP 0 118 572 A1

0118572

# A PROCESS FOR PREPARATION OF DIENE STYRENE-α-METHYLSTYRENE BLOCK POLYMERS AND POLYMERS THEREFROM

Block polymers of α-methylstyrene and butadiene of the ABA configuration wherein A represents a block of α-methylstyrene and B represents a butadiene block are disclosed in British Patent 1,444,680, and also described in the Journal of Applied Polymer Science, Volume 22, 2907-2913 (1978). However, α-Methylstyrene has a relatively low ceiling temperature of about 61°C, generally polymerization proceeds slowly and must be carried out at relatively low temperatures.

It would be desirable if there were an improved process for the preparation of diene-α-methylstyrene containing block polymers which would permit relatively rapid polymerization of monomers to produce thermoplastic elastomers and impact resistant thermoplastic resins.

These benefits are achieved in a process for the preparation of block polymers by the sequential polymerization of at least one conjugated diene monomer to form a diene polymer block and copolymerization of a vinylaromatic monomer and an isopropenylaromatic monomer

to form a vinylaromatic/isopropenylaromatic polymer block. The process is further characterized in that the polymerization is (1) conducted in a solvent comprising the isopropenylaromatic monomer present in an excess of at least 2 moles per liter of reaction mixture, (2) initiated by a lithium based polymerization initiator, and (3) carried out at a temperature of 20° to 160°C, and preferably from 45° to 160°C, during the formation of the vinylaromatic/isopropenylaromatic polymer block to thereby provide a diene vinylaromatic/isopropenylaromatic block copolymer wherein the mole ratio of vinylaromatic monomer to isopropenylaromatic monomer is from 50:1 to 1:50 and advantageously from 2:1 to 1:2.5.

Also contemplated within the scope of the present invention is a block copolymer of the formula $AB(BA)_n$ wherein n has a value of 0 or greater, preferably a value equal to or less than 20; A represents a block of a copolymer of vinylaromatic/isopropenylaromatic monomer wherein the ratio of vinylaromatic to isopropenylaromatic monomer is from 50:1 to 1:50 and preferably from 2:1 to 1:2.5; B is a diene polymer block wherein the diene is selected from a group consisting of 1,3-butadiene and isoprene and mixtures thereof containing 0 to 40 weight percent of aromatic monomer copolymerizable therewith; and the weight ratio of A block to B block varies from 50:1 to 1:50 and is preferably 90:10 and 10:90.

By the term "vinylaromatic monomer" is meant a monovinylaromatic monomer of the formula:

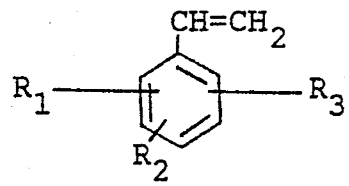

Formula I

wherein $R_1$, $R_2$ and $R_3$ are individually selected from the group of hydrogen radicals, alkyl radicals, with the further limitation that the total number of carbon atoms in $R_1$, $R_2$, and $R_3$ is not greater than ten, and mixtures thereof. Such vinylaromatic monomers include styrene, methylstyrene, ethylstyrene, dimethylstyrene, trimethylstyrene, tertiary-butylstyrene, tertiary-amylstyrene, tertiary-hexylstyrene, octylstyrene, 2-ethylhexylstyrene, and decylstyrene. Any isomer of the foregoing monomers is useful in the process of the invention. However for most applications, the para isomer is preferred such as para-methylstyrene.

By the term "isopropenylaromatic monomer" is meant a monoisopropenylaromatic monomer of the formula:

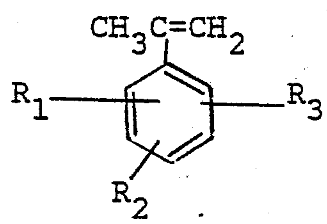

Formula II

wherein $R_1$, $R_2$ and $R_3$ are defined as above. Such isopropenylaromatic monomers include $\alpha$-methylstyrene and p-isopropenyltoluene.

By the term "aromatic monomer" is meant a monomer of Formula I or Formula II and mixtures thereof.

The resultant block copolymers may be elastomeric or resinous depending upon the proportions of the ingredients selected. Polymers prepared employing low portions of the diene, i.e., 2 to 40 weight percent polydiene, are generally resinous, transparent, and particularly suited for packaging applications wherein both low temperatures and high temperatures are encountered; for example, frozen foods which are subsequently heated prior to serving. Polymers in accordance with the present invention which contain higher proportions of the polydiene block, for example, from 50 to 80 weight percent polydiene, provide desirable thermoplastic elastomers having a relatively high service temperature and highly desirable low temperature characteristics. Polymers of the invention containing over 80 to 98 weight percent polydiene are elastomers of improved green strength. Polymers containing from about 40 to 50 weight percent diene are what might be considered soft plastics.

The molecular weight of the block copolymer in accordance with the present invention as determined by gel permeation chromatography will vary from about 5,000 to 800,000 molecular weight units. Particularly desirable polymers for most applications have a molecular weight range from about 20,000 to 500,000 molecular weight units.

Preferably the polymer blocks B are elastomeric polymer blocks of an unsaturated diene such as butadiene, isoprene or mixtures thereof containing from 0 to 40 weight percent of aromatic monomer copolymerizable therewith such as styrene, α-methylstyrene, α-methylstyrene or mixtures thereof. It is essential

to the present invention that the 1,2-vinyl polydiene microstructure content of the polydiene block be not greater than 25 percent, the 1,2-vinyl content being computed from the infrared spectrum by the method of P. Morero et al., as set forth in Chim, Ind. Milan, 41, 758 (1959).

Block copolymers in accordance with the present invention may be of the linear AB or ABA configuration or the branched configuration such as $AB(BA)_n$. Also the possibility exists for preparing two types of sequential polymer blocks depending on the conditions of the anionic copolymerization. A two-stage sequential addition and polymerization of the diene and vinylaromatic monomer will give a pure block polymer. However, a graded or tapered block polymer will be obtained by polymerizing a mixture of the diene and vinylaromatic monomer in the presence of excess α-methylstyrene. Typically such tapered block polymers may contain 0.1 to 40 weight percent of the A block monomer in the B block and 0 to 10 weight percent of the B block monomer in the A block. In the preparation of a linear polymer such as of the ABA configuration, a difunctional lithium initiator may be employed; whereas in the preparation of the simplest branched or radial polymer having the structure $AB(BA)_n$ a polyfunctional or multifunctional lithium polymerization initiator may be employed. By the term "simplest" is meant the index n in $AB(BA)_n$ is equal to or less than 3. In the preferred polymers of the invention n has an average value of 1 or greater and the junction between the A and B blocks may be tapered or nontapered. Such tapered block copolymers are particularly useful in the high impact resin blends of U.S. Patent 3,906,058.

Multifunctional lithium containing initiators are well known in the art as is the use of such initiators in the polymerization of olefinically unsaturated hydrocarbon monomers. Such polymers and initiators are disclosed in the following U.S. Patents: 3,660,536; 3,663,634; 3,668,263; 3,684,780; 3,725,368; 3,734,973; 3,776,893; 3,776,964; 3,784,637; 3,787,510; 3,954,894; 4,172,100; 4,172,190; 4,182,818; 4,196,153; 4,196,154; 4,200,718; 4,201,729 and 4,205,016. It is known that very desirable lithium initiators can be prepared by the addition of two moles of an organolithium compound, such as butyllithium, to one mole of a compound containing two 1,1-diphenylethylene groups.

The method of the present invention can be used in a variety of ways. For example in the preparation of AB block copolymer employing an initiator such as secondary butyllithium or normal-butyllithium, several procedures may be used. A tapered AB block copolymer can be prepared by admixing the isopropenylaromatic monomer such as α-methylstyrene, diene and vinylaromatic monomer such as styrene, adding initiator to provide a tapered AB polymer. Alternatively isopropenylaromatic monomer and diene are admixed, initiator added, the diene polymerized, subsequently the vinylaromatic monomer is added to the reaction mixture in a continuous or stepwise manner to provide a polymer with a polybutadiene block attached to a vinylaromatic monomer-isopropenylaromatic monomer copolymer block. A similar block copolymer can be prepared by admixing the isopropenylaromatic monomer with the vinylaromatic monomer and immediately after the vinylaromatic/isopropenylaromatic monomer copolymerization is complete, the diene is added

resulting in AB polymer with a polydiene block and an isopropenylaromatic/vinylaromaticmonomer copolymer block.

ABA polymers are readily prepared employing the method of the present invention, employing a difunctional organolithium initiator by admixing, for example, α-methylstyrene, styrene and diene, adding initiator and on polymerization a tapered ABA α-methylstyrene/styrene diene polymer is obtained wherein the A block has polymerized therein from 0 to 10 weight percent of the diene monomer and the B block has polymerized therein from 0.1 to 40 weight percent aromatic monomer. Alternatively, the isopropenylaromatic monomer such as α-methylstyrene and diene are admixed, the initiator added, on completion of the polymerization of the diene, the vinylaromatic monomer such as styrene is added to provide an ABA α-methylstyrene-styrene terminal block and a polydiene central block. Polymers of the ABA configuration are also prepared using monofunctional initiator such as secondary butyllithium or a normal butyllithium by admixing the isopropenyl aromatic monomer and vinylaromatic monomer, adding initiator, on completion copolymerization of the aromatic monomers the diene monomer is added, on completion of polymerization of the diene a coupling agent is introduced to the reaction mixture thereby providing a polymer of ABA configuration.

Another route to an ABA polymer is to admix the aromatic monomers with a monofunctional initiator, when copolymerization of the vinylaromatic monomer is complete, diene monomer is added, on completion of polymerization of the diene monomer additional vinyl

aromatic monomer is provided to the reaction mixture resulting in an ABA polymer having a polydiene center block and aromatic monomer copolymer terminal blocks. Alternatively a vinylaromatic/isopropenylaromatic monomer mixture may be initiated and prior to completion of the copolymerization, diene monomer is added, also resulting in a polymer having ABA configuration.

So-called radial, star or multi-armed polymers desirably are prepared employing a polyfunctional initiator using the general procedure set forth wherein a tapered diene polymer block copolymer may be obtained or a homo polydiene block obtained depending upon the sequence of monomer addition. An alternate route to radial block copolymers is to prepare a living polymer of the AB configuration employing a multifunctional coupling agent; for example, silicon tetrachloride, or divinylbenzene.

The present invention is further illustrated by the following examples. All reactions and polymerizations were conducted under a dry nitrogen atmosphere. All glass containers were baked at 150°C overnight, and flushed with nitrogen before use. The transfer of monomers and reagents was carried out with nitrogen flushed syringes. All monomers and reagents were purified according to the standard procedure used in anionic polymerization.

<u>Example 1</u> - Preparation of tapered styrene-α-methylstyrene butadiene diblock copolymer

A 1-liter flask was charged with 506 grams of α-methylstyrene. The α-methylstyrene was then treated

with 0.56 millimole of secondary-butyllithium to inactivate residual moisture, oxygen and other impurities. 60 Grams of 1,3-butadiene together with 18 grams of styrene and 0.62 millimole of secondary butyllithium were added to the flask in that order. The flask was placed in a water bath having a temperature which varied from about 45° to 60°C and served to maintain the polymerization temperature. After a period of 5½ hours, the contents of the vessel became red in color. The temperature rose about 10° above that of the water bath indicating the beginning of polymerization of the styrene and α-methylstyrene copolymer block. The contents of the flasks were maintained at a temperature above about 60°C for an additional 30 minutes after the appearance of the red coloration. 2 Milliliters of methanol were added to the reaction mixture to terminate the active polymer chains. Polymer was recovered from the reaction mixture by precipitation in methanol. Gel permeation chromatography was employed to determine the molecular weight of the product which was 350,000 grams per mole.

Nuclear magnetic resonance was employed to determine the composition of the block copolymer which was 59.6 weight percent butadiene, 18 weight percent styrene and 22.4 weight percent α-methylstyrene.

<u>Example 2</u> - Preparation of tapered styrene-α-methylstyrene butadiene styrene-α-methylstyrene triblock copolymer

A 1-liter flask was charged with 470 grams of α-methylstyrene which was then treated with 0.30 millimoles of secondary-butyllithium to inactivate moisture,

oxygen and other undesirable active compounds. Thirty-two grams of 1,3-butadiene and 41 grams styrene were added to the flask. An initiator solution was prepared by reacting a 3.08 millimole solution of secondary-butyllithium in 5.3 milliliters of cyclohexane with 1.54 millimole solution of 1,3-di[1-(4-methylphenyl)ethenyl] benzene in 25 milliliters of toluene for 19 hours at room temperature to obtain 1.54 millimole solution of a dilithium initiator 1,3-phenylene-bis(3-methyl-1-phenylpentylidene)-bis(lithium). The initiator was added to the flask and water bath having a temperature varying about 40° to about 50°C was employed to obtain the polymerization temperature. After a period of 75 minutes, the mixture in the flask changed to a dark red color and the temperature of the contents rose to about 15°C above that of the water bath indicating that the butadiene had all polymerized to form a block and the styrene α-methylstyrene copolymer blocks were being formed. The temperature of the reaction mixture was maintaned over 60°C for an additional 40 minutes after the appearance of the dark red color. 3 Milliliters of methanol were added to the flask to terminate active polymer chains. Polymer was recoverd by precipitation in methanol. The molecular weight of the polymer as determined by gel permeation chromatography was 120,000 grams per mole. The weight composition based on total polymerization of butadiene and styrene monomers and nuclear magnetic resonance measurement was 30 percent butadiene, 39 percent styrene, 31 percent α-methylstyrene. 7 Weight percent of the total α-methylstyrene charged to the flask polymerized. The polymer was a thermoplastic having good clarity. Physical properties as determined from compression molded specimens were:

| | |
|---|---|
| Tensile Yield | 27.4 MPa (3980 psi) |
| Ultimate Elongation | 33 percent |
| Tensile Modulus | 2250 MPa ($3.26 \times 10^5$ psi) |
| Izod Impact Strength | 48 J/m (0.9 ft lbs/in notch) |
| Vicat Softening Point | 128°C |

Example 3 - Preparation of tapered triblock copolymer

The procedure of Example 2 was repeated with the exception that the following quantities of reactants were employed:

| | |
|---|---|
| α-Methylstyrene | 410 grams |
| 1,3-butadiene | 38 grams |
| styrene | 11 grams |
| dilithium initiator | 0.99 millimole |

The resultant tapered triblock polymer had a molecular weight of 108,000 grams per mole. The composition was 56.7 weight percent butadiene, 16.4 weight percent styrene and 26.9 weight percent α-methylstyrene. The polymer was a thermoplastic elastomer. The properties as determined from compression molded specimens were:

| | |
|---|---|
| Tensile rupture strength | 21.2 MPa (3080 psi) |
| Elongation at break | 750 percent |

Example 4 - Preparation of styrene-α-methylstyrene butadiene styrene-α-methylstyrene triblock copolymer

The procedure of Example 2 was employed with the exception that the styrene monomer was added after completion of the butadiene polymerization and the following quantities of materials were employed:

| | |
|---|---|
| α-Methylstyrene | 430 grams |
| 1,3-butadiene | 42 grams |
| Styrene | 10 grams |
| Dilithium initiator | 0.87 millimole |

The resultant triblock copolymer had a molecular weight of 142,000 grams per mole as determined by gel permeation chromatography and a composition of 59 weight percent butadiene, 14 weight percent styrene and 27 weight percent α-methylstyrene. The polymer is a thermoplastic elastomer. Compression molded specimens showed a tensile rupture strength of 26.6 MPa (3860 psi) and an elongation at break of 750 percent.

Example 5 - Preparation of triblock copolymer styrene--α-methylstyrene butadiene styrene-α-methylstyrene

The procedure of Example 2 was repeated with the following exception; the styrene monomer was added after the completion of butadiene polymerization and the following quantities of material were employed:

| | |
|---|---|
| α-Methylstyrene | 470 grams |
| 1,3-butadiene | 34 grams |
| Styrene | 43 grams |
| dilithium initiator | 1.58 millimoles |

The resultant triblock copolymer had a molecular weight of 88,000 grams per mole as determined by gel permeation chromatography and a composition of 32 weight percent butadiene, 41 weight percent styrene and 27 weight percent α-methylstyrene. The product was a thermoplastic resin of good clarity. Physical properties as determined from compression molded specimens were:

| | |
|---|---|
| Tensile yield strength | 22.4 MPa (3250 psi) |
| Ultimate elongation | 8.3 percent |
| Tensile modulus | 1450 MPa ($2.1 \times 10^5$ psi) |
| Izod impact strength | 43 J/m (0.8 ft lbs/in notch) |
| Vicat softening point | 112° centigrade |

Example 6 - Preparation of Triblock copolymer

The procedure of Example 4 was repeated with the following exception, that the styrene monomer was added in two portions 8 minutes apart following the completion of the butadiene polymerization. The materials used were 485 grams of α-methylstyrene, 42 grams of 1,3-butadiene. The first portion of styrene 20 grams; the second portion of styrene 20 grams and 1.38 millimoles of the dilithium initiator. The resultant triblock copolymer had a molecular weight of

94,000 as determined by gel permeation chromatography and a composition of 32.8 weight percent butadiene; 34.5 weight percent styrene and 32.7 weight percent α-methylstyrene. The physical properties as determined from compression molded specimens were:

| | |
|---|---|
| Tensile yield strength | 16.3 MPa (2360 psi) |
| Ultimate elongation | 7.4 percent |
| Tensile modulus | 1030 MPa ($1.5 \times 10^5$ psi) |
| Iozd impact strength | 120 J/m (2.3 ft-lbs/in) |
| Vicat softening point | 115° centigrade |

Example 7 - Preparation of triblock copolymer by coupling with phenyl benzoate

A 1-liter flask was charged with 410 grams of α-methylstyrene which was then treated with 0.9 millimole of a secondary-butyllithium at room temperature to inactivate moisture, oxygen and other impurities. The contents of the flask were then heated to about 50° centigrade employing a water bath. 16.3 Grams of styrene monomer were added to the flask and a solution of 1.7 millimoles of secondary-butyllithium in 3 milliliters of cyclohexane were added. The solution in the flask turned a red color and then a dark red color. The temperature of the reaction mixture rose to 67° centigrade, 17 degrees above that of the water bath. About 4 minutes after the appearance of the dark red color, 45 grams of 1,3-butadiene were added to the flask. The color of the contents of the flask changed from dark red to light yellow. The water bath temperature was maintained between about 40° to 60°C for about

70 minutes. At the end of that time, a solution of 0.96 millimole of phenyl benzoate in 1.4 milliliters of toluene was added to the reaction mixture. The reaction mixture was maintained at a temperature of between about 50° and 60° centigrade for a period of about 1 hour after the addition of the phenyl benzoate. The reaction was terminated at that time by the addition of 0.2 milliliter of acetic acid. Polymer was recovered from the reaction mixture by precipitation in methanol. 89.5 Grams of polymer were obtained. The composition of the polymer was determined with the aid of gel permeation chromatography. The polymer contained 20 weight percent styrene-α-methylstyrene random copolymer; 10 weight percent styrene-α-methylstyrene butadiene diblock copolymer and 70 weight percent styrene-α--methylsytrene butadiene styrene-α-methylstyrene triblock copolymer. The weight composition of the triblock copolymer was 63 percent butadiene, 14 percent styrene and 23 percent α-methylstyrene. The molecular weight of the triblock copolymer as determined by gel permeation chromatography was 156,000 grams per mole. The product was a thermoplastic elastomer; physical properties as determined from compression molded specimens were:

| | |
|---|---|
| Tensile rupture strength | 26.0 MPa (3760 psi) |
| Elongation at break | 780 percent |

Example 8 - Preparation of triblock copolymer by coupling with bis(chloromethyl)diphenyl oxide

The procedure of Example 7 was repeated with the exceptions that bis(chloromethyl)diphenyl oxide was employed in place of phenyl benzoate and the following materials and quantities were used. α-Methylstyrene 400 grams; styrene 12.7 grams; 1,3-butadiene 45 grams; secondary butyllithium 0.23 millimole for impurities; 1.81 millimoles for initiation; bis(chloromethyl)diphenyl oxide 0.73 millimole. The time allowed to polymerize the first block of styrene-α-methylstyrene block copolymer was 3 minutes. The temperature rose from 53° to 64° centigrade. Other conditions were as in Example 7.

The product was a thermoplastic elastomer weighing 83 grams. The product contained 11 weight percent styrene-α-methylstyrene random copolymer; 19 weight percent styyrene-α-methylstyrene butadiene diblock copolymer and 70 weight percent of triblock styrene-α-methylstyrene butadiene styrene-α-methylstyrene copolymer. The molecular weight of the triblock copolymer was 116,000 grams per mole and the weight composition was 61 percent butadiene, 13 percent styrene and 26 percent α-methylstyrene. Physical properties obtained from compression molded specimens were:

| | |
|---|---|
| Tensile rupture strength | 22.3 MPa (3230 psi) |
| Elongation at break | 690 percent |

0118572

Example 9 - Preparation of radial block copolymer by coupling with silicon tetrachloride

The procedure of Example 7 was repeated employing silicon tetrachloride in place of the phenyl benzoate as a coupling agent, employing the following materials: α-methylstyrene 400 grams: styrene 12.7 grams; 1,3-butadiene 45 grams; secondary butyllithium 0.9 millimoles for impurities; 1.8 millimoles for initiation; silicon tetrachloride 0.48 millimole. The time allowed for polymerization of the first styrene-α-methylstyrene random block was 3 minutes and the temperature rose from 50° to 61° centigrade. Other conditions were as in Example 7.

The product was a thermoplastic elastomer weighing 82 grams and contained about 12 weight percent styrene-α-methylstyrene random copolymer and 88 weight percent radial block copolymer. The molecular weight of the radial block copolymer was 164,000 grams per mole and theweight composition was 62 percent butadiene, 13 percent styrene and 25 percent α-methylstyrene. The properties of the product as determined from compression molded specimens were:

| | |
|---|---|
| Tensile rupture strength | 27.4 MPa (3980 psi) |
| Elongation at break | 570 percent |

Example 10 - Preparation of styrene-α-methylstyrene butadiene styrene-α-methylstyrene triblock by step addition

The procedure of Example 7 was repeated with the exception that styrene monomer was used in place of

phenyl benzoate to permit the formation of a triblock copolymer of ABA configuration. The materials employed were α-methylstyrene 400 grams; styrene 6.8 grams for formation of the first block. An additional 5 grams of styrene were employed in place of phenyl benzoate; 1,3-butadiene 48 grams; 0.28 millimole secondary-butyllithium for impurities, and 0.96 millimole for initiation.

The following polymerization conditions differed from those of Example 7:

(a) The time allowed for polymerization of the first block of styrene-α-methylstyrene was 3 minutes. The temperature rose from 53° to 60° centigrade.

(b) The second block polybutadiene required 125 minutes. The water bath was maintained between 40° and 60°.

(c) The third block of styrene-α-methylstyrene random copolymer was polymerized over a period of 15 minutes with a temperature of about 55° centigrade.

The product contained 87 grams of a thermoplastic elastomer containing about 8 weight percent styrene-α-methylstyrene random copolymer and 92 weight percent triblock copolymer. The molecular weight of the triblock copolymer was 131,000 grams per mole and weight composition of 60 percent butadiene, 12 percent styrene and 28 percent α-methylstyrene. Compression molded specimens of the product had a tensile rupture strength of 20.2 MPa (2930 psi) and an elongation at break of 510 percent.

Example 11 - Preparation of triblock copolymer by coupling with phenyl benzoate.

The procedure of Example 7 was repeated with the following exceptions. The materials employed were:

| | |
|---|---|
| α-methylstyrene | 510 grams |
| styrene | 40 grams |
| 1,3-butadiene | 27 grams |
| secondary butyllithium | 0.41 millimoles for impurities<br>2.05 millimoles for initiation |
| phenyl benzoate | 0.91 millimoles |

The time allowed to polymerize the first block of styrene-α-methylstyrene random copolymer was 5 minutes and the temperature rose from 41° to 61°C. Other conditions were those of Example 7.

The product was a medium impact transparent resin weighing 104 grams. The product contained 18 weight percent styrene-α-methylstyrene random copolymer, 6.0 weight percent diblock and 76 weight percent of triblock. The triblock copolymer had a molecular weight of 113,000 grams per mole and a weight composition of 31 percent butadiene, 36 percent styrene and 33 percent α-methylstyrene.

Compression molded specimens of the product had the following physical properties:

| | |
|---|---|
| Tensile yield strength | 28.0 MPa (4060 psi) |
| Ultimate elongation | 10 percent |
| Tensile modulus | 1440 MPa (2.09 x $10^5$ psi) |
| Izod impact strength | 21 J/m (0.4 ft-lb/in notch) |
| Vicat softening point | 115° centigrade |

<u>Example 12</u> Preparation of styrene-α-methylstyrene butadiene styrene-α-methylstyrene triblock copolymer having one end tapered

A 1-liter flask was charged with 400 grams of α-methylstyrene. In order to remove residual moisture, oxygen and impurities, 0.42 millimole of secondary-butyllithium in cyclohexane was added. The contents of the flask were heated to about 54° centigrade, 12.7 grams of styrene and 0.96 millimole of secondary-butyllithium were added. The solution within the flask turned red in color and the temperature rose 5 degrees above that of the water bath in 1½ minutes. One and one-half minutes after the addition of the styrene, 45 grams of 1,3butadiene were added and the reaction mixture color changed from red to light orange and then yellow. The water bath temperature was maintained between about 40° and 60° centigrade. About 110 minutes after the addition of the butadiene monomer, the polymerization mixture color changed to red, indicating completion of the butadiene block and start of polymerization of another styrene-α-methylstyrene copolymer block. About 30 minutes after the second appearance of red color, 1 milliliter of propanol-2 was added to terminate polymerization. The product was isolated as in Example 7. 79 Grams of a thermoplastic elastomer was obtained

which was almost 100 percent triblock copolymer. The molecular weight as determined by gel permeation chromatography was 92,000 grams per mole. The weight composition was 57 percent butadiene, 16 percent styrene, and 27 percent α-methylstyrene. Product physical properties as determined from compression molded samples were: tensile rupture strength 21.2 MPa (3070 psi), and elongation at break 740 percent.

Example 13 Preparation of Radial Block Copolymer by Coupling with Divinylbenzene

The procedure of Example 9 is repeated with the exception that purified divinylbenzene is employed in place of silicon tetrachloride. The divinylbenzene is added slowly with vigorous agitation and multifunctional radial block copolymer is recoveredwith more than 3 arms. The number of arms of the radial block copolymer in general is dependent upon the amount of divinylbenzene employed. Preparation of multi-armed radial or star block copolymers is discussed at length by L-K. Bi and L. J. Fetters in Macromolecules, Volume 9, page 732 through 742, 1976.

Example 14 Preparation of Tapered Styrene-α-Methylstyrene Isoprene Styrene-α-Methylstyrene Triblock Copolymer

The procedure of Example 2 was repeated with the exception that the isoprene monomer was used in place of butadiene and the following quantities of reactants were used:

| | |
|---|---|
| α-methylstyrene | 359 grams |
| isoprene | 34 grams |
| styrene | 17.2 grams |
| dilithium initiator | 0.99 millimole |

The resultant tapered triblock polymer had a molecular weight of 80,000 grams per mole. The composition was 50.0 weight percent isoprene, 25.3 weight percent styrene and 24.7 weight percent α-methylstyrene. The polymer was a thermoplastic elastomer. The properties as determined from compression molded specimens were:

| | |
|---|---|
| Tensile Rupture Strength | 14.9 MPa (2160 psi) |
| Elongation at Break | 400 percent |

Example 15 Preparation of Tapered Styrene-α-Methylstyrene Butadiene-Isoprene Styrene-α-Methylstyrene Triblock Copolymer

The procedure of Example 2 was repeated with the exception that a mixture of butadiene and isoprene monomers was used in place of butadiene and the following quantities of reactants were used:

| | |
|---|---|
| α-methylstyrene | 364 grams |
| isoprene | 17 grams |
| butadiene | 19 grams |
| styrene | 17.2 grams |
| dilithium initiator | 0.86 millimole |

The resultant triblock copolymer had a molecular weight of 104,000 grams per mole as determined by gel permeation chromatography and a composition of 27 weight percent butadiene, 24 weight percent isoprene, 24 weight percent styrene, and 25 weight percent α-methylstyrene. The polymer is a thermoplastic elastomer. The properties as determined from compression molded specimens were:

| | |
|---|---|
| Tensile Rupture Strength | 26.2 MPa (3800 psi) |
| Elongation at Break | 660 percent |

0118572

WHAT IS CLAIMED IS:

1. A process for the preparation of block polymers by the sequential polymerization of at least one conjugated diene monomer to form a diene polymer block and copolymerization of a vinylaromatic monomer and an isopropenylaromatic monomer to form a vinylaromatic/isopropenylaromatic polymer block, characterized in that the polymerization is (1) conducted in a solvent comprising the isopropenylaromatic monomer present in an excess of at least 2 moles per liter in the reaction mixture, (2) initiated by a lithium based polymerization initiator, and (3) carried out at a temperature of 20° to 160°C during the formation of the vinylaromatic/-isopropenylaromatic polymer block to thereby provide a diene-vinylaromatic/isopropenylaromatic block copolymer wherein the ratio of vinylaromatic monomer to isopropenylaromatic monomer is from 50:1 to 1:50.

2. The process of Claim 1 wherein the diene monomer is butadiene, isoprene, or a mixture thereof and the block copolymer contains from 2 to 98 weight percent of the diene polymer block.

3. The process of Claim 1 wherein the lithium polymerization initiator is polyfunctional and the

diene polymer block is formed prior to the vinylaromatic/-isopropenylaromatic monomer block.

4. The process of Claim 1 wherein the lithium based intiator is monofunctional.

5. The process of Claim 4 including the steps of forming a living block copolymer of vinylaromatic monomer/isopropenylaromatic random copolymer block-diene polymer block wherein lithium terminates the diene polymer block and subsequently contacting the living block copolymer with a coupling agent.

6. The process of Claim 1 including the step of adding the vinylaromatic monomer to the isopropenylaromatic monomer in a continuous manner during the formation of the vinylaromatic/isopropenylaromatic polymer block.

7. The process of Claim 1 wherein the vinyl aromatic monomer is styrene, p-methylstyrene or a mixture thereof, and the isopropenylaromatic monomer is α-methylstyrene, p-isopropenyltoluene, or a mixture thereof.

8. The process of Claim 1 wherein all monomers and solvent are in admixture prior to addition of the initiator.

9. A block copolymer of the formula $AB(BA)_n$ wherein A is a random copolymer block of a vinylaromatic monomer and an isopropenylaromatic monomer; B is a diene polymer block of 1,3-butadiene, isoprene or mixtures thereof and has a 1,2-vinyl content not greater

than 25 percent; and n is zero or greater characterized in that the block copolymer is tapered and contains:

(1) 2 to 90 weight percent of block A wherein the ratio of polymerized vinylaromatic to isopropenylaromatic monomer is from 50:1 to 1:50 and block A has polymerized therewith from 0 to 10 weight percent of the diene monomer; and

(2) 98 to 2 weight percent of block B having polymerized therewith from 0.1 to 40 weight percent of a copolymerizable aromatic monomer;

and n is equal to or less than 3.

10. The tapered block copolymer of Claim 9 wherein the monomers are styrene, α-methylstyrene, and 1,3-butadiene.

11. The tapered block copolymer of Claim 9 wherein block A contains polymerized vinylaromatic/-isopropenylaromatic monomer in the weight ratio of 2:1 to 1:2.5 and the block copolymer has a molecular weight of 5,000 to 800,000.

12. A block copolymer of the formula $AB(BA)_n$ wherein A is a random copolymer block of a vinylaromatic monomer and an isopropenylaromatic monomer; B is a diene polymer block of 1,3-butadiene, isoprene or mixtures thereof and has a 1,2-vinyl content not greater than 25 percent; and n is zero or greater characterized in that the block copolymer contains:

(1) 2 to 98 weight percent of block A wherein ratio of polymerized vinylaromatic to isopropenylaromatic monomer is from 50:1 to 1:50; and

(2) 98 to 2 weight percent of block B having polymerized therewith from 0 to 40 weight percent of a copolymerizable aromatic monomer;

and n is greater than 3 but equal to or less than 20.

13. A block copolymer of the formula $AB(BA)_n$ wherein A is a random copolymer block of a vinylaromatic monomer and an isopropenylaromatic monomer, B is a diene polymer block of 1,3-butadiene, isoprene or mixtures thereof and has a 1,2-vinyl content not greater than 25 percent, and n is zero or greater characterized in that the block copolymer contains:

(1) 2 to 98 weight percent of block A wherein the ratio of polymerized vinylaromatic to isopropenylaromatic monomer is from 50:1 to 1:50;

(2) 98 to 2 weight percent of block B having polymerized therewith from 0 to 40 weight percent of a copolymerizable aromatic monomer;

and n is equal to or less than 20; said block copolymer being prepared by the process of Claim 1.

14. The block copolymer of Claim 12 or 13 wherein the monomers are styrene, αmethylstyrene and 1,3-butadiene.

European Patent Office

# EUROPEAN SEARCH REPORT

0118572
Application number

EP 83 10 2211

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | | | C 08 F 297/04 |
| X | DE-A-2 015 249 (SHELL) * Claims 1,2,8,9 * --- | 1-5,7 | |
| X | EP-A-0 014 947 (DOW) * Claims 1-3,5,6,8 * --- | 1-3,6,7 | |
| X | US-A-3 912 793 (HORIIE et al.) * Claims 1-4; example 1; column 3, lines 1-6 * ----- | 1-3,6,7 | |
| | | | TECHNICAL FIELDS SEARCHED (Int. Cl. 3) |
| | | | C 08 F |

The present search report has been drawn up for all claims

| Place of search | Date of completion of the search | Examiner |
|---|---|---|
| THE HAGUE | 07-11-1983 | MEULEMANS R.A.M.G.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82